Europäisches Patentamt

European Patent Office

Office européen des brevets

(19)

(11) Veröffentlichungsnummer: **0 016 999**
**B1**

(12) **EUROPÄISCHE PATENTSCHRIFT**

(45) Veröffentlichungstag der Patentschrift: **11.04.84**

(51) Int. Cl.³: **A 01 K 63/04, C 02 F 3/00**

(21) Anmeldenummer: **80101149.5**

(22) Anmeldetag: **06.03.80**

(54) Biologische Filtervorrichtung für Aquarien.

(30) Priorität: **12.03.79 DE 2909583**

(43) Veröffentlichungstag der Anmeldung:
**15.10.80 Patentblatt 80/21**

(45) Bekanntmachung des Hinweises auf die Patenterteilung:
**11.04.84 Patentblatt 84/15**

(84) Benannte Vertragsstaaten:
**AT BE CH FR GB IT NL SE**

(56) Entgegenhaltungen:
**DE - A - 2 705 070**
**DE - A - 2 811 943**
**DE - U - 7 217 410**

**Helmut Wachtel, Aquariumshygiene,**
**Franckh'sche Verlagshandlung, 5. Auflage 1975,**
**S. 31-38**

(73) Patentinhaber: **SP Jürgen Schwarzer GmbH & Co
KG**
**Steeler Strasse 477a**
**D-4300 Essen 14 (DE)**

(72) Erfinder: **Schwarzer, Jürgen**
**Springloh 17a**
**4300 Essen 15 (DE)**
Erfinder: **Seidensticker, Hans-Jürgen**
**Iländerweg 7**
**D-4300 Essen 16 (DE)**
Erfinder: **Lüttringhaus, Heinz**
**Ringstrasse 23a**
**D-4300 Essen 18 (DE)**

(74) Vertreter: **Spalthoff, Adolf, Dipl.-Ing.**
**Pelmanstrasse 31 P.O. Box 34 02 20**
**D-4300 Essen 1 (DE)**

Courier Press, Leamington Spa, England.

Biologische Filtervorrichtung für Aquarien

Die Erfindung betrifft eine biologische Filtervorrichtung für Aquarien mit einem über einen Wasserzulauf an das Aquarium anschließbaren und von dem zu filternden Wasser durchströmten Filtergefäß, in dem wenigstens eine ein Filtersubstrat mit einem biologisch aktiven Bakterienrasen enthaltende Filterkammer vorgesehen ist, oberhalb derer sich ein mit dem Wasserzulauf in Verbindung stehender Verteiler befindet und deren Filtersubstrat von dem ggf. vorgefilterten Wasser in Gegenwart von über eine Zuleitung zugeführter Luft durchrieselt und die oberhalb einer Klarwasserkammer angeordnet ist, wobei von der Klarwasserkammer eine Leitung für das gefilterte Wasser abgeht.

Bei einer biologischen Filtervorrichtung für Aquarien dieser Art ist es bekannt, die Luftzufuhr, welche im Gegenstrom zum Wasser das Filtersubstrat durchströmt, im Bodenbereich des Filtergefäßes zuzuführen. Das gefilterte Wasser wird aus der unter dem Filtergefäß vorgesehenen Klarwasserkammer über ein Steigrohr mittels einer Luftförderpumpe nach dem Injektorprinzip abgefördert. Diese bekannte Anordnung hat den wesentlichen Nachteil, daß die Luftförderpumpen nach dem Injektorprinzip in ihrer Förderhöhe stark begrenzt sind mit der Folge, daß auch eine bestimmte Höhe der Filtergefäße nicht überschritten werden kann (siehe z.B. Helmuth Wachtel, Aquariumhygiene, Frank'sche Verlagshandlung Stuttgart, 5 Auflage 1975, Seiten 31 bis 38).

Von diesem Stand der Technik ausgehend liegt der Erfindung die Aufgable zugrunde, eine biologische Filtervorrichtung der eingangs genannten Art zu schaffen, welche in einfacher Weise und aus vergleichsweise wenigen Teilen aufgebaut ist sowie eine beliebige Auslegung der Filtergefäße ermöglicht.

Gemäß der einen Erfindungsform wird dies dadurch erreicht, daß das Filtergefäß und die Klarwasserkammer über einen Kanal miteinander verbunden sind, welcher auf der der Klarwasserkammer zugekehrten Seite als Ventilsitz ausgebildet ist, dem als Verschlußorgan ein Schwimmerventil od.dgl. zugeordnet ist, welches in einem Käfig od.dgl. geführt ist, und daß die Luftzufuhr über den Anschlußstutzen an die Klarwasserkammer angeschlossen ist. Durch diese Ausgestaltung wird erreicht, daß die für den bakteriellen Abbauprozeß benötigte Luft außerdem zur Förderung des gefilterten Wassers dient, so daß sich insgesamt eine außerordentlich einfache Bauweise unter Verwendung vergleichsweise weniger Einzelteile ergibt, wobei darüber hinaus die Förderhöhe nicht begrenzt ist, da es lediglich einer entsprechenden Zufuhr an Luft von einer Druckmittelquelle bedarf, mit der Folge, daß die Filtergefäße auch vergleichsweise hoch ausgebildet werden können. Durch die schwimmerventilartige Ausgestaltung der Verbindung zwischen Filtergefäß und Klarwasserkammer ergibt sich eine kontinuierliche Arbeitsweise, da bei Ansteigen des gefilterten Wassers in der Klarwasserkammer dieses letztlich das Schwimmerventil gegen die Öffnung des Durchtritts preßt, so daß weiteres gefiltertes Wasser aus dem Filtergefäß nicht mehr zulaufen kann. Gleichzeitig wird das in der Klarwasserkammer befindliche, gefilterte Wasser über die zugeführte Luft über eine Ableitung aus der Klarwasserkammer abgeführt, was zu einem Absenken des Wasserspiegels bis zur Eintrittsöffnung der Ableitung führt. Erst wenn Luft in die Ableitung eintreten kann, öffnet das Schwimmerventil wieder, weil dann der in der Klarwasserkammer enthaltene Überdruck gegenüber dem Filtergefäß entweichen kann. Dieser Bewegungsablauf wiederholt sich laufend und völlig selbsttätig, wobei zu Beginn lediglich die Menge des zugeführten Wassers und die der zuzuführenden Luft eingeregelt zu werden braucht. Bei geöffnetem Durchtritt strömt die in der Klarwasserkammer eingeführte Luft von unten her in das Filtergefäß und verteilt sich gleichmäßig über das Filtersubstrat und durchströmt dieses in Gegenrichtung zu dem zu filternden Wasser. Dieser Prozeß wird nur kurzzeitig bei geschlossenem Durchtritt unterbrochen, wobei in dieser Phase die Luft zur Förderung des gefilterten Wassers dient.

Die Erfindung erstreckt sich weiterhin auf eine biologische Filtervorrichtung für Aquarien mit einem über einem Wasserzulauf an das Aquarium anschließbaren und von dem zu filternden Wasser durchströmten Filtergefäß, in dem wenigstens eine ein Filtersubstrat mit einem biologisch aktiven Bakterienrasen enthaltende Filterkammer vorgesehen ist, oberhalb deren sich ein mit dem Wasserzulauf in Verbindung stehender Verteiler befindet und deren Filtersubstrat von dem ggf. vorgefilterten Wasser in Gegenwart von über eine Zuleitung zugeführter Luft durchrieselt und oberhalb einer Klarwasserkammer angeordnet ist, wobei von der Klarwasserkammer eine Leitung für das gefilterte Wasser abgeht. Bei dieser Ausführungsform sind das Filtergefäß und die Klarwasserkammer über einen Kanal miteinander verbunden und in der Klarwasserkammer ist ein Schwimmerschalter od.dgl. angeordnet, welcher bei ansteigendem Wasser bei Erreichen eines bestimmten Wasserstandes eine Kreiselpumpe od.dgl. zur Abförderung des gefilterten Wassers einschaltet und bei absinkendem Wasser bei Erreichen eines bestimmten Wasserstandes die Kreiselpumpe od.dgl. wieder abschaltet. Diese Ausführungsform ist aufwendiger als die vorstehend beschriebene, da besondere Schaltmittel vorgesehen sein müssen, um einen Trockenlauf der Pumpe zu verhindern, wenn nicht mehr genug gefiltertes Wasser nachläuft.

Vorteilhaft mündet der Anschlußstutzen für die Luftzufuhr oberhalb des Wasserspiegels in die Klarwasserkammer ein, so daß die Luft bei geöffnetem Durchtritt das gefilterte Wasser nicht zu durchströmen braucht. Die Luft kann sich in der Klarwasserkammer in dem verbleibenden Raum zwischen Wasseroberfläche und der oberen Wandung der Klarwasserkammer frei ausdehnen, was zu einer Beruhigung der einströmenden Luft und einer Geräuschminderung führt.

Gemäß einem weiteren Merkmal der Erfindung verläuft die Stirnfläche der Ableitung für das gefilterte Wasser parallel zur Wasseroberfläche der Klarwasserkammer und weist einen derartigen Abstand vom Boden auf, daß bei abgesunkenem Wasserstand in der Klarwasserkammer das in dieser befindliche Wasser nicht mehr von der aufsteigenden Luft mitgezogen werden kann. Auf diese Weise wird eine Geräuschbildung, z.B. ein sog. Blubbern, vermieden.

Vorteilhaft besteht der Verteiler aus zwei koaxial angeordneten Rohren, die mit einander zugeordneten Schlitzen od.dgl. ausgerüstet sind, welche derart ausgebildet und angebracht sind, daß bei einem Verdrehen der Rohre gegeneinander die sich deckenden Bereiche der Schlitze vergrößert oder verkleinert werden. Auf diese Weise läßt sich der Durchtrittsquerschnitt der Schlitze verändern, und zwar von einer maximalen Weite bis zu einer Absperrung.

Das vom Zulauf abgekehrte Ende des Verteilers ist über eine Rückleitung mit dem Aquarium verbunden, so daß ein Teil des zugeführten, zu filternden Wassers, der nicht aus dem Verteiler in das Filtergefäß gelangt, in das Aquarium zurückgefördert wird, was zu einer Wasserbewegung im Aquarium führt. Da die Menge des zugeführten Wassers wesentlich größer ist als die Menge des in das Filtergefäß gelangenden Wassers, wird die Wasseroberfläche des Aquariums ständig bewegt, so daß sich das Wasser mit Sauerstoff anreichern kann. Außerdem wird die Bildung eines Films auf der Wasseroberfläche vermieden, welcher wie eine Abdeckung mittels einer Folie wirksam wäre.

Der Boden des Filtergefäßes weist zu der Öffnung des Kanals hin Gefälle auf, so daß das gesamte gefilterte Wasser zwangsläufig in die Öffnung des Kanals gelangt. Auf der Öffnung des Kanals ist im Boden des Filtergefäßes mit geringem Abstand zu diesem eine Platte od.dgl. vorgesehen, welche etwa in ihrem mittleren Bereich eine Durchtrittsöffnung besitzt. An der Durchtrittsöffnung ist im mittleren Bereich der Platte od.dgl. ein Rohrstutzen angebracht, der sich in das Filtersubstrat erstreckt. An das Ende des Rohrstutzens sind Verteilrohre angeschlossen, die an ihren Unterseiten mit Luftaustrittsöffnungen versehen sind und sich in das Filtersubstrat erstrecken. Die austretende Luft gelangt somit in das Filtersubstrat und kann dieses nach oben hin durchströmen. Die Höhe des Rohrstutzens ist derart bemessen, daß der Wasserspiegel im Filtergefäß in der Schließphase des Schwimmerventils oder des Schwimmerschalters diesen oder die an diesen angeschlossenen Verteilrrohre nicht übersteigen kann, d.h. nicht in die Verteilerrohre und damit in den Rohrstutzen gelangen kann. Durch diese zusätzliche Platte od.dgl. wird erreicht, daß das gefilterte Wasser allseitig an deren Rändern vorbeilaufen kann und in die Klarwasserkammer gelangt, wobei der Spalt derart bemessen ist, daß der Filtersubstrat nicht in die Durchtrittsöffnungen gelangen kann. Die Luftzufuhr erfolgt in der Mitte der Platte über ein T-Stück, verteilt sich von daher gleichmäßig und kann somit durch die von unten einströmende Luft in seiner Strömungsrichtung nicht behindert werden.

Das Filtergefäß ist mittels eines Deckels wasserdicht verschlossen und mit einem Entlüftungsrohr versehen, welches vorteilhaft so bemessen ist, daß dieses sich bis zur Oberkante des Aquariums erstreckt. Diese Ausführung hat den Vorteil, daß das Filtergehäuse nicht in Höhe des Aquariums angeordnet zu werden braucht, sondern auch unterhalb von dessen Wasserspiegel ausgestellt sein kann, beispielsweise in einem Fach eines Tisches unterhalb des Aquariums, in einem Schrank od.dgl.

Gemäß einem weiteren Merkmal der Erfindung können mehrere Filtergefäße mit Klarwasserkammern nebeneinander angeordnet sein, wobei die Verteiler der Filtergefäße einerseits und die Klarwasserkammern andererseits in Reihe miteinander verbunden sind. Durch diesen reihenweisen Zusammenschluß ergibt sich die Möglichkeit einer baukastenmäßigen Zusammensetzung der Filtergefäße, je nach der Größe des zugehörigen Aquariums. Die Zufuhr des zu filternden Wassers erfolgt über den Wasserzulauf in die einzelnen Verteiler der Filtergefäße. Aus den miteinander verbundenen Klarwasserkammern geschieht die Ableitung über das Steigrohr der letzten Klarwasserkammer.

Bei der Reihenverbindung von mehreren Filtervorrichtungen ist es auch möglich, jede Klarwasserkammer mit einer eigenen Ableitung sowie einem Eindfilter auszurüsten.

Das zu filternde Wasser gelangt aus dem Wasserzulauf über ein Steuerorgan in den Verteiler, so daß die Durchsatzmenge gesteuert ist.

Die Ableitung für das gefilterte Wasser ist an ein Endfilter angeschlossen, welches über eine weitere Leitung mit dem Aquarium verbunden ist. In dem Endfilter findet eine Nachreinigung des gefilterten Wassers statt, so daß dieses vom abgestorbenen Bakterienrasen befreit wird.

Im Boden der Klarwasserkammer ist eine Öffnung vorgesehen, in welcher ein Schraubverschluß dichtend eingeschraubt ist. Der Boden der Klarwasserkammer weist zu der den Schraubverschluß enthaltenden Öffnung hin Gefälle auf, so daß sich im Bereich des Schraubverschlusses etwaiger Schmutz ablagern kann. Durch Öffnen des Schraubverschlusses ist eine schnelle und einfache Reinigung möglich. Vorteilhaft ist der Schraubverschluß mit einem Ansatz versehen, an dessen anderem Ende der das Schwimmerventil od.dgl. aufnehmende Käfig od.dgl. angebracht ist. Auch durch diese Ausgestaltung ist eine leichte Kontrolle und Säuberung möglich, da mit dem Herausnehmen des Schraubverschlusses gleichzeitig auch der Käfig mit dem darin befindlichen Schwimmerventil entnommen werden kann. Die Öffnung im Boden der Klarwasserkammer ist so groß bemessen, daß der Käfig ohne weiteres durch diese herausgenommen werden kann.

Ein Ausführungsbeispiel der Erfindung ist an Hand der Zeichnungen näher erläutert, und zwar zeigt:

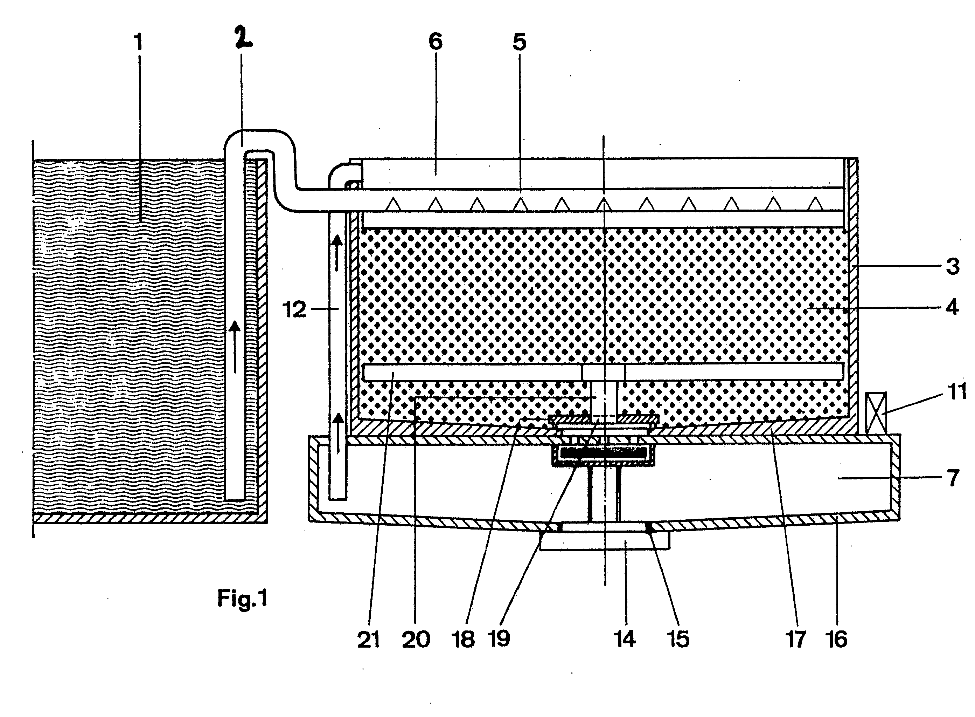

Fig. 1 eine geschnittene Ansicht der erfindungsgemäßen Vorrichtung und

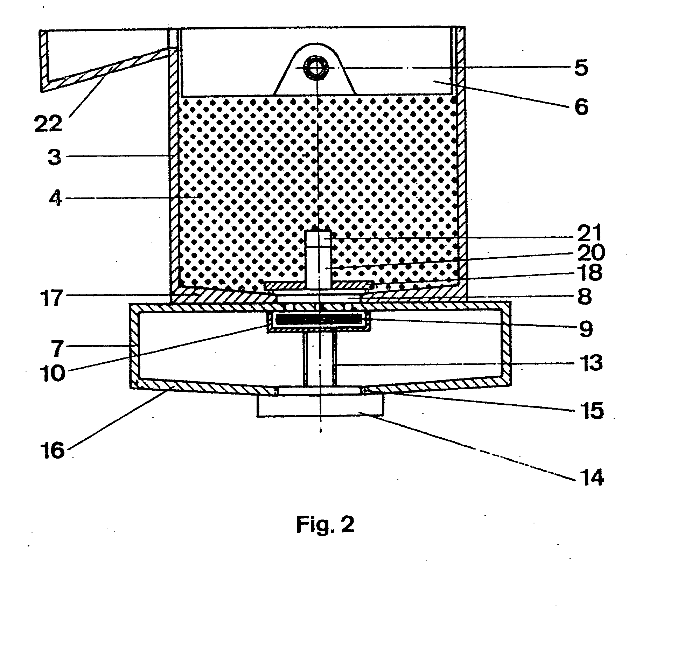

Fig. 2 eine geschnittene Seitenansicht der Fig. 1.

Mit 1 ist das Aquarium bezeichnet, aus dem über den Zulauf 2 das zu filternde Wasser dem Filtergefäß 3 zugeführt wird. Das Filtergefäß 3 ist mit einem Filtersubstrat 4 gefüllt, beispielsweise Basaltsplit, auf dem ein biologischchemisch aktiver Bakterienrasen aerober Bakterien angesiedelt ist.

Im oberen Bereich des Filtergehäuses 3 ist ein Verteiler 5 sowie ein Endfilter 6 vorgesehen.

Der Zulauf 2 ist an den Verteiler 5 angeschlossen, welcher aus zwei koaxialen Rohren besteht, die mit einander zugeordneten Schlitzen od.dgl. ausgerüstet sind, was nicht näher dargestellt ist. Die Schlitze sind derart ausgebildet und angeordnet, daß bei einem Verdrehen der Rohre gegeneinander die sich deckenden Bereiche der Schlitze vergrößert oder verkleinert werden, so daß genau die gewünschte Durchtrittsmenge einstellbar ist. Die Form der Schlitze kann tropfenförmig, dreieckig usw. sein. Die koaxial angeordneten Rohre des Verteilers 5 sind nur mit ganz geringem Spiel zueinander angeordnet, so daß eine Drehbewegung zur Einstellung der gewünschten Austrittsmenge des zu filternden Wassers zwar möglich ist, jedoch durch die Scherbewegung sich etwa absetzende Algen, Bakterien usw. entfernt werden, so daß der Verteiler 5 sich praktisch selbst reinigt. Das Ende des Verteilers 5 ist zum Aquarium 1 zurückgeführt, was nicht weiter dargestellt ist.

Das Filtergefäß 3 ist auf eine Klarwasserkammer 7 aufgesetzt und mit dieser über einen Durchtritt 8 verbunden. Der Durchtritt 8 ist etwa ventilsitzartig ausgebildet, wobei als Verschlußorgan ein Schwimmerventil 9 dient. Das Schwimmerventil 9 ist in einem Käfig 10 geführt, der an dem Ansatz 13 eines Schraubverschlusses 14 angebracht ist, welcher in die Öffnung 15 im Boden 16 der Klarwasserkammer 7 dichtend eingeschraubt ist. Durch Herausschrauben des Schraubverschlusses 14 kann der Käfig 10 und das in ihm befindliche Schwimmerventil 9 aus der Öffnung 15 herausgenommen und beispielsweise überprüft oder gesäubert werden. Der Boden 16 der Klarwasserkammer 7 weist zu der den Schraubverschluß 14 aufnehmenden Öffnung 15 hin Gefälle auf, so daß sich etwa eindringender Schmutz im Bereich dieser Öffnung 15 auf dem Schraubverschluß 14 ablagern kann. Eine leichte Säuberung ist auf diese Weise möglich.

Auf dem Durchtritt 8 im Boden 17 des Filtergefäßes 3 ist mit geringem Abstand zu diesem eine Platte 18 vorgesehen. Die Platte 18 liegt mit an ihrer Unterseite angebrachten Noppen od.dgl. auf dem Rand des Bodens um den Durchtritt 8 auf, wobei der Abstand so bemessen ist, daß kein Filtersubstrat in diesen ringförmigen Spalt gelangen kann. Die Führung der Platte 18 in dem Durchtritt 8 übernehmen vorragende Stifte od.dgl., die an der Innenseite des Durchtritts 8 anliegen. Im mittleren Bereich weist die Platte 18 eine Durchtrittsöffnung 19 auf, an die der Rohrstutzen 20 angeschlossen ist. Der Rohrstutzen 20 erstreckt sich in das Filtersubstrat 4. An seinem Ende sind Verteilerrohre 21 angeordnet, die mit einer Vielzahl von nach unten oder schräg nach unten gerichteten Öffnungen versehen sind, die der Einfachheit halber nicht dargestellt sind. Die Verteilerrohre 21 erstrecken sich über die ganze Breite des Filtergefäßes 3.

An die Klarwasserkammer 7 ist über den Anschlußstutzen 11 eine Luftzufuhr angeschlossen. Außerdem mündet in die Klarwasserkammer 7 eine Ableitung 12 für das gefilterte Wasser ein, und zwar in Form eines Steigrohres, welche zu dem Endfilter 6 geführt ist, der oberhalb des Filtergefäßes 3 angeordnet ist. Von dem Endfilter 6 ist eine nicht weiter dargestellte Ablaufleitung zum Aquarium 1 vorgesehen.

Die erfindungsgemäße Vorrichtung arbeitet wie folgt:

Durch Einstellen der koaxial angeordneten Doppelrohre des Verteilers 5 wird die Menge des zu filternden Wassers vorgegeben, welche über die von den Schlitzen der beiden koaxialen Rohre gebildeten Öffnungen auf das Filtersubstrat 4 gelangt und dieses durchrieselt. Bei geöffnetem Schwimmerventil 9 gelangt über den Anschlußstutzen 11 zugeführte Luft durch die Klarwasserkammer 7 und den Durchtritt 8 sowie die Durchtrittsöffnung 19 in der Platte 18, in den Rohrstutzen 20 und von diesem über die Verteilerrohre 21 über deren Austrittsöffnungen in das Filtersubstrat 4 und durchströmt dieses in Gegenrichtung zu dem von oben zugeführten, zu filternden Wasser. Die Menge der zugeführten Luft und die des zu filternden Wassers werden in Abhängigkeit zueinander eingestellt, so daß sich eine kontinuierliche selbsttätige Arbeitsweise ergibt. Wenn das gefilterte Wasser, welches durch den Spalt zwischen der Platte 18 und dem Boden 17 des Filtergefäßes sowie den Durchtritt 8 vorbei am Schwimmerventil 9 in die Klarwasserkammer gelangt, in diesem eine bestimmte Höhe erreicht hat, drückt das sich ansammelnde Klarwasser auf das Schwimmerventil 9, welches sich gegen den ventilsitzartig ausgebildeten Durchtritt 8 legt und diesen verschließt. Nunmehr kann weder Luft von der Klarwasserkammer 7 in das Filtergefäß 3 eintreten, noch umgekehrt gefiltertes Wasser in die Klarwasserkammer 7 gelangen. Zu diesem Zeitpunkt fördert die über den Anschlußstutzen 11 eingeleitete Luft das gefilterte Wasser aus der Klarwasserkammer 7 und die Ableitung 12 auf das Endfilter 6, von welchem es über den Überlauf 22 zurück in das Aquarium 1 gelangt. Sobald der Wasserspiegel auf ein bestimmtes Maß abgesunken ist, gibt das Schwimmerventil 9 die Öffnungen des Durchtritts 8 frei, so daß gefiltertes Wasser wieder in die Klarwasserkammer 7 nachlaufen und gleichzeitig Luft wieder von unten her in das Filtergefäß 3 einströmen kann. Dieses Arbeitsspiel wiederholt sich laufend und selbständig.

**Patentansprüche**

1. Biologische Filtervorrichtung für Aquarien mit einem über einen Wasserzulauf (2) an das Aquarium (1) anschließbaren und von dem zu filternden Wasser durchströmten Filtergefäß (3), in dem wenigstens eine ein Filtersubstrat (4) mit einem biologisch aktiven Bakterienrasen enthaltende Filterkammer vorgesehen ist, oberhalb derer sich ein mit dem Wasserzulauf (2) in Verbindung stehender Verteiler (5) befindet und deren Filtersubstrat (4) von dem ggf. vorgefilterten Wasser in Gegenwart von über eine Zuleitung (11) zugeführter Luft durchrieselt und die oberhalb einer Klarwasserkammer (7) angeordnet ist, wobei von der Klarwasserkammer (7) eine Leitung (12) für das gefilterte Wasser abgeht, dadurch gekennzeichnet, daß das Filtergefäß (3) und die Klarwasserkammer (7) über einen Kanal (8) miteinander verbunden sind, welcher auf der der Klarwasserkammer zugekehrten Seite als Ventilsitz ausgebildet ist, dem als Verschlußorgan ein Schwimmerventil (9) od.dgl. zugeordnet ist, welches in einem Käfig (10) od.dgl. geführt ist, und daß die Luftzufuhr über den Anschlußstutzen (11) an die Klarwasserkammer (7) angeschlossen ist.

2. Biologische Filtervorrichtung für Aquarien mit einem über einen Wasserzulauf (2) an das Aquarium (1) anschließbaren und von dem zu filternden Wasser durchströmten Filtergefäß (3), in dem wenigstens eine ein Filtersubstrat (4) mit einem biologisch aktiven Bakterienrasen enthaltende Filterkammer vorgesehen ist, oberhalb derer sich ein mit dem Wasserzulauf (2) in Verbindung stehender Verteiler (5) befindet und deren Filtersubstrat (4) von dem ggf. vorgefilterten Wasser in Gegenwart von über eine Zuleitung (11) zugeführter Luft durchrieselt und die oberhalb einer Klarwasserkammer (7) angeordnet ist, wobei von der Klarwasserkammer (7) eine Leitung (12) für das gefilterte Wasser abgeht, dadurch gekennzeichnet, daß das Filtergefäß (3) und die Klarwasserkammer (7) über einen Kanal (8) miteinander verbunden sind und in der Klarwasserkammer (7) ein Schwimmerschalter od.dgl. angeordnet ist, welcher bei ansteigendem Wasser bei Erreichen eines bestimmten Wasserstandes eine Kreiselpumpe od.dgl. zur Abförderung des gefilterten Wassers einschaltet und bei absinkendem Wasser bei Erreichen eines bestimmten Wasserstandes die Kreiselpumpe od.dgl. wieder abschaltet.

3. Biologische Filtervorrichtung nach Anspruch 1, dadurch gekennzeichnet, daß der Anschlußstutzen (11) für die Luftzufuhr oberhalb des Wasserspiegels in die Klarwasserkammer (7) einmündet.

4. Biologische Filtervorrichtung nach einem der Ansprüche 1 bis 3, dadurch gekennzeichnet, daß die Stirnfläche der Ableitung (12) für das gefilterte Wasser parallel zur Wasseroberfläche der Klarwasserkammer (7) verläuft und einen derartigen Abstand vom Boden (16) aufweist, daß bei abgesunkenem Wasserstand in der Klarwasserkammer (7) das in dieser befindliche Wasser nicht mehr von der aufsteigenden Luft mitgezogen werden kann.

5. Biologische Filtervorrichtung nach einem der Ansprüche 1 bis 4, dadurch gekennzeichnet, daß der Verteiler (5) aus zwei koaxial angeordneten Rohren besteht, die mit einander zugeordneten Schlitzen od.dgl. ausgerüstet sind, welche derart ausgebildet und angebracht sind, daß bei einem Verdrehen der Rohre gegeneinander die sich deckenden Bereiche der Schlitze vergrößert oder verkleinert werden.

6. Biologische Filtervorrichtung nach einem der Ansprüche 1 bis 5, dadurch gekennzeichnet, daß das vom Zulauf (2) abgekehrte Ende des Verteilers (5) über eine Rückleitung mit dem Aquarium (1) verbunden ist.

7. Biologische Filtervorrichtung nach einem der Ansprüche 1 bis 6, dadurch gekennzeichnet, daß auf des Öffnung des Kanals (8) im Boden (17) des Filtergefäßes (3) mit geringem Abstand zu diesem eine Platte (18) od.dgl. vorgesehen ist, welche etwa in ihrem mittleren Bereich eine Durchtrittsöffnung (19) aufweist.

8. Biologische Filtervorrichtung nach Anspruch 7, dadurch gekennzeichnet, daß an der Durchtrittsöffnung (19) im mittleren Bereich der Platte (18) od.dgl. ein Rohrstutzen (20) angebracht ist, der sich in das Filtersubstrat (4) erstreckt.

9. Biologische Filtervorrichtung nach Anspruch 7 oder 8, dadurch gekennzeichnet, daß an das Ende des Rohrstutzens (20) Verteilerrohre (21) angeschlossen sind, die an ihren Unterseiten mit Luftaustrittsöffnungen versehen sind und sich in das Filtersubstrat (4) erstrecken.

10. Biologische Filtervorrichtung nach Anspruch 8 oder 9, dadurch gekennzeichnet, daß die Höhe des Rohrstutzens (20) derart bemessen ist, daß der Wasserspiegel im Filtergefäß (3) in der Schließphase des Schwimmerventils (9) oder des Schwimmerschalters diesen oder die an diesen angeschlossenen Verteilerrohre (21) nicht übersteigen kann.

11. Biologische Filtervorrichtung nach einem der Ansprüche 1 bis 10 der vorhergehenden, dadurch gekennzeichnet, daß das Filtergefäß (3) mittels eines Deckels wasserdicht verschlossen und mit einem Entlüftungsrohr versehen ist.

12. Biologische Filtervorrichtung nach Anspruch 11, dadurch gekennzeichnet, daß das Entlüftungsrohr so bemessen ist, daß dieses sich bis zur Oberkante des Aquariums erstreckt.

13. Biologische Filtervorrichtung nach einem der Ansprüche 1 bis 12, dadurch gekennzeichnet, daß mehrere Filtergefäße (3) mit Klarwasserkammern (7) nebeneinander angeordnet sind, wobei die Verteiler (5) der Filtergefäße (3) einerseits und die Klarwasserkammern (7) andererseits in Reihe miteinander verbunden sind.

**Revendications**

1. Dispositif de filtration biologique pour aquariums formé d'une cuve à filtre (3) reliable à l'aquarium (1) par une amenée d'eau (2) et traversée par l'eau à filtrer, cuve à filtre dans laquelle est prévue au moins une chambre de filtration renfermant un substrat filtrant (4) avec un gazon bactériel biologiquement actif au-dessus de laquelle se trouve un distributeur (5) relié à l'amenée d'eau (2) et dont le substrat filtrant (4) est irrigué par l'eau, éventuellement préfiltrée, en présence d'air venant d'une alimentation (11), laquelle chambre de filtration est placée au-dessus d'une chambre à eau pure (7) d'où sort une conduite (12) pour l'eau filtrée, dispositif de filtration caractérisé par le fait que la cuve à filtre (3) et la chambre à eau pure (7) sont reliées entre elles par un canal (8) qui, du côté tourné vers la chambre à eau pure, forme un siège de soupape avec lequel coopère comme organe de fermeture une soupape à flotteur (9), ou un organe analogue, guidée dans une cage (10) ou un corps analogue et que l'amenée d'air est reliée par la tubulure d'alimentation (11) à la chambre à eau pure (7).

2. Dispositif de filtration biologique pour aquariums fermé d'une cuve à filtre (3) reliable à l'aquarium (1) par une amenée d'eau (2) et traversée par l'eau à filtrer, cuve à filtre dans laquelle est prévue au moins une chambre de filtration renfermant un substrat filtrant (4) avec un gazon bactériel biologiquement actif au-dessus de laquelle se trouve un distributeur (5) relié à l'amenée d'eau (2) et dont le substrat filtrant (4) est irrigué par l'eau, éventuellement préfiltrée, en présence d'air venant d'une alimentation (11), laquelle chambre de filtration est placée au-dessus d'une chambre à eau pure (7) d'où sort une conduite (12) pour l'eau filtrée, dispositif de filtration caractérisé par le fait que la cuve à filtre (3) et la chambre à eau pure (7) sont reliées entre elles par un canal (8) et qu'il se trouve dans la chambre à eau pure (7) un interrupteur à flotteur ou analogue qui, lorsque l'eau monte, met en circuit au moment où l'on atteint un niveau d'eau déterminé une pompe centrifuge ou analogue pour l'évacuation de l'eau filtrée et, lorsque l'eau descend, remet hors circuit ladite pompe centrifuge ou analogue au moment où l'on atteint de même un niveau d'eau déterminé.

3. Dispositif de filtration biologique selon la revendication 1 caractérisé par le fait que la tubulure d'alimentation (11) pour l'amenée de l'air débouche dans la chambre à eau pure (7) au-dessus du niveau de l'eau.

4. Dispositif de filtration biologique selon l'une quelconque des revendications 1 à 3 caractérisé par le fait que la surface frontale de la conduite d'évacuation (12) de l'eau filtrée est parallèle à la surface de l'eau de la chambre à eau pure (7) et se trouve à une distance du fond (16) de cette dernière telle qu'une fois que le niveau de l'eau s'est abaissé dans la chambre à eau pure (7), l'eau se trouvant dans cette dernière ne puisse plus être entraînée par l'air ascendant.

5. Dispositif de filtration biologique selon l'une quelconque des revendications 1 à 4 caractérisé par le fait que le distributeur (5) se compose de deux tubes disposés coaxialement qui sont munis de fentes ou ouvertures analogues correspondantes entre elles qui sont établies et fixées en sorte qu'en cas de rotation des tubes l'un par rapport à l'autre les zones qui, dans ces fentes, se recouvrent entre elles se trouvent agrandies ou diminuées.

6. Dispositif de filtration biologique selon l'une quelconque des revendications 1 à 5 caractérisé par le fait que l'extrémité du distributeur (5) la plus éloignée de l'amenée (2) est reliée à l'aquarium (1) par une conduite de retour.

7. Dispositif de filtration biologique selon l'une quelconque des revendications 1 à 6 caractérisé par le fait que sur l'ouverture du canal (8), il est prévu dans le fond (17) de la cuve à filtre (3), et à une faible distance de celle-ci, une plaque (18) ou un élément analogue, qui comporte dans sa zone centrale une ouverture de passage (19).

8. Dispositif de filtration biologique selon la revendication 7 caractérisé par le fait que sur l'ouverture de passage (19) de la zone centrale de la plaque (18) est fixée une tubulure (20) qui s'étend dans le substrat filtrant (4).

9. Dispositif de filtration biologique selon l'une quelconque des revendications 7 ou 8 caractérisé par le fait que des tubes distributeurs (21) qui sont munis d'ouvertures de sortie d'air sur leurs faces inférieures et s'etendent dans le substrat filtrant (4) sont reliés à l'extrémité de la tubulure (20).

10. Dispositif de filtration biologique selon l'une quelconque des revendications 8 ou 9 caractérisé par le fait que la hauteur de la tubulure (20) est établie en sorte que, dans la phase de fermeture de la soupape à flotteur (9) ou de l'interrupteur à flotteur, le niveau de l'eau dans la cuve à filtre (3) ne puisse pas s'élever au-dessus de ladite tubulure ou des tubes distributeurs (21) reliés à cette dernière.

11. Dispositif de filtration biologique selon l'une quelconque des revendications 1 à 10 caractérisé par le fait que la cuve à filtre (3) est fermée de façon étanche à l'eau par un couvercle et munie d'un tube de dégagement d'air.

12. Dispositif de filtration biologique selon la revendication 11 caractérisé par le fait que le tube de dégagement d'air a des dimensions telles qu'il s'étend jusqu'à l'arête supérieure de l'aquarium.

13. Dispositif de filtration biologique selon l'une quelconque des revendications 1 à 12 caractérisé par le fait que plusieurs cuves à filtre (3) avec chambres à eau pure (7) sont disposées les unes à côté des autres avec branchement en série, d'une part, des distributeurs (5) des cuves à filtre (3) et, d'autre part, des chambres à eau pure (7).

**Claims**

1. Biological filtering apparatus for aquariums comprising a filter vessel (3) which is adapted to be connected to the aquarium (1) via a water inlet (2), and through which the water to be filtered will pass, and in which at least one filter chamber, which contains a filter substrate (4) with a biologically active bacteria layer, is provided, above which a manifold (5), which is in communication with the water inlet (2) is located, the water, which is prefiltered if necessary, trickling through the filter substrate (4) of the filter chamber in the presence of air which is fed thereto by an inlet conduit (11), the filter chamber being disposed above a clear water chamber (7), wherein a conduit (12) for the filtered water branches off from the clear water chamber (7), characterized thereby that the filter vessel (3) and the clear water chamber (7) are connected with each other via a duct (8) which forms a valve seat at the side facing the clear water chamber, to which a float valve (9) or the like as a closure device is assigned, which float valve is guided in a cage (10) or the like and that the air supply is connected to the clear water chamber (7) via the connecting branch (11).

2. Biological filtering apparatus for aquariums comprising a filter vessel (3) which is adapted to be connected to the aquarium (1) via a water inlet (2), and through which the water to be filtered will pass and in which at least one filter chamber, which contains a filter substrate (4) with a biological active bacteria layer, is provided, above which a manifold (5), which is in communication with the water inlet (2) is located, the water, which is prefiltered if necessary, trickling through the filter substrate (4) of the filter chamber in the presence of air which is fed thereto by an inlet conduit (11), the filter chamber being disposed above a clear water chamber (7), wherein a conduit (12) for the filtered water branches off from the clear water chamber (7) characterized thereby that the filter vessel (3) and the clear water chamber (7) are connected with each other via a duct (8) and a float switch or the like is disposed in the clear water chamber, which float switch switches on a rotary pump or the like for conveying off the filtered water when the rising water reaches a certain water level and again switches off the rotary pump or the like when the falling water reaches a certain level.

3. Biological filtering apparatus according to Claim 1 characterized thereby that the connecting branch (11) for the air supply enters the clear water chamber (7) above the water level.

4. Biological filtering apparatus according to anyone of Claims 1 to 3 characterized thereby that the frontal area of the outlet (12) for the filtered water extends parallel to the water surface of the clear water chamber and is so spaced from the bottom (16) that when the water level in the clear water chamber (7) has sunk the water therein can no more be drawn off by the rising air.

5. Biological filtering apparatus according to anyone of Claims 1 to 4 characterized thereby that the manifold (5) consists of two coaxially disposed tubes, which are equipped with slits or the like which are assigned to each other and which are so formed and so disposed that when the tubes are twisted relative to each other the areas of the slits covering themselves are increased or minimized.

6. Biological filtering apparatus according to anyone of Claims 1 to 5 characterized thereby that that end of the inlet (2) which is remote from the manifold (5) is connected with the aquarium (1) via a return conduit.

7. Biological filtering apparatus according to anyone of Claims 1 to 6 characterized thereby that a plate (18) or the like is provided on the opening of the duct (8) in the bottom (17) of the filter vessel (3) in close proximity to it, which plate comprises a through-hole (19) approximately in its central area.

8. Biological filtering apparatus according to Claim 7 characterized thereby that a short piece of pipe (20) is mounted to the through-hole (19) in the central area of the plate (18) or the like, which short piece of pipe extends into the filter substrate (4).

9. Biological filtering apparatus according to Claim 7 or 8 characterized thereby that distributing pipes (21) are connected to the end of the short piece of pipe (20), the distributing pipes being provided with air-exit openings at their bottom sides and extending into the filter substrate (4).

10. Biological filtering apparatus according to Claim 8 or 9 characterized thereby that the height of the short piece of pipe (20) is so dimensioned that the water level in the filter vessel (3) cannot exceed it or the distributing pipes (21) connected to it in the closing phase of the float valve (9) or the float switch.

11. Biological filtering apparatus according to anyone of Claims 1 to 10 characterized thereby that the filter vessel (3) is closed water-tightly by means of a lid and provided with an air vent pipe.

12. Biological filtering apparatus according to Claim 11 characterized thereby that the air vent pipe is so dimensioned that it extends to the top edge of the aquarium.

13. Biological filtering apparatus according to anyone of Claims 1 to 12 characterized thereby that a plurality of filter vessels (3) with clear water chambers (7) are arranged side-by-side wherein the manifold (5) of the filter vessels (3) on the one hand and the clear water chambers (7) on the other hand are connected with each other in series.

Fig.1

Fig. 2